Europäisches Patentamt

European Patent Office

Office européen des brevets

(11) Publication number: **0 449 409 A2**

# EUROPEAN PATENT APPLICATION

(21) Application number: 91300999.9

(22) Date of filing: 07.02.91

(51) Int. Cl.⁵: **G01N 27/00, G11B 9/08,** G11B 11/08

(30) Priority: 08.02.90 JP 27244/90

(43) Date of publication of application:
02.10.91 Bulletin 91/40

(84) Designated Contracting States:
BE CH DE ES FR GB IT LI NL SE

(71) Applicant: CANON KABUSHIKI KAISHA
30-2, 3-chome, Shimomaruko, Ohta-ku
Tokyo (JP)

(72) Inventor: Sakai, Kunihiro
c/o Canon K.K., 30-2, 3-chome
Shimomaruko, Ohta-ku, Tokyo (JP)

Inventor: Kawase, Toshimitsu
c/o Canon K.K., 30-2, 3-chome
Shimomaruko, Ohta-ku, Tokyo (JP)
Inventor: Yamano, Akihiko
c/o Canon K.K., 30-2, 3-chome
Shimomaruko, Ohta-ku, Tokyo (JP)
Inventor: Kuroda, Ryo
c/o Canon K.K., 30-2, 3-chome
Shimomaruko, Ohta-ku, Tokyo (JP)
Inventor: Nose, Hiroyasu
c/o Canon K.K., 30-2, 3-chome
Shimomaruko, Ohta-ku, Tokyo (JP)

(74) Representative: Beresford, Keith Denis Lewis
et al
BERESFORD & Co. 2-5 Warwick Court High
Holborn
London WC1R 5DJ (GB)

(54) Probe unit, information processing device using same and methods of use and manufacture.

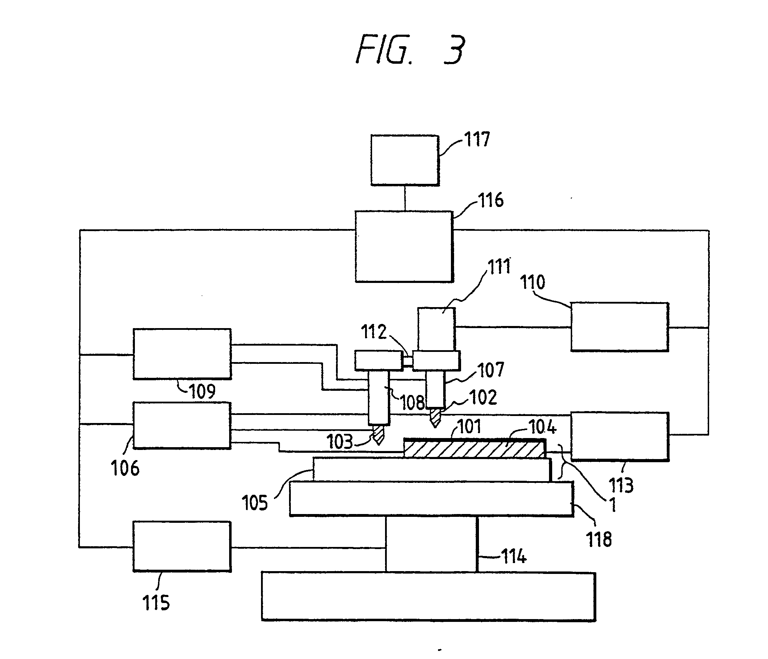

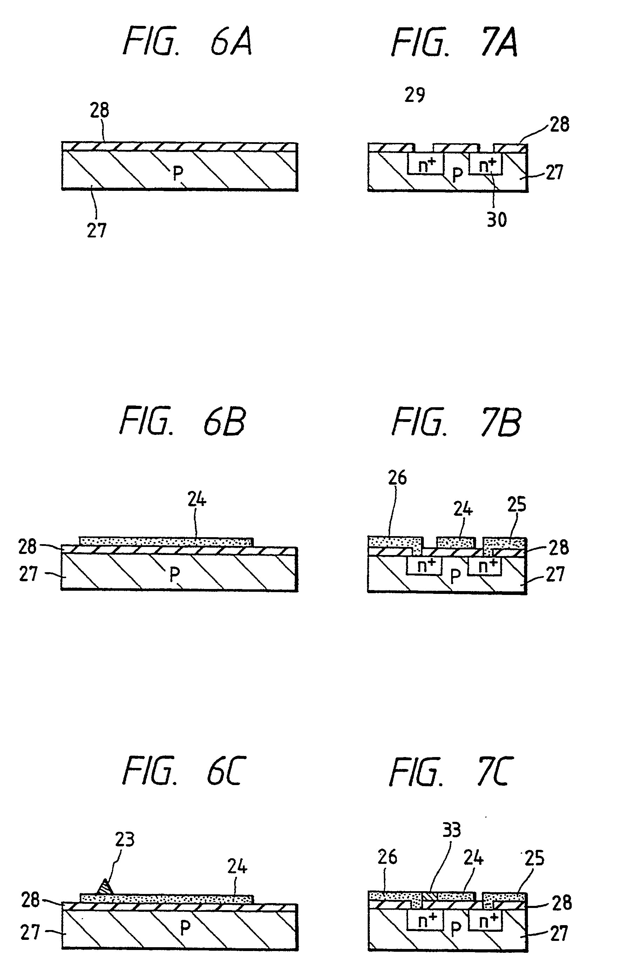

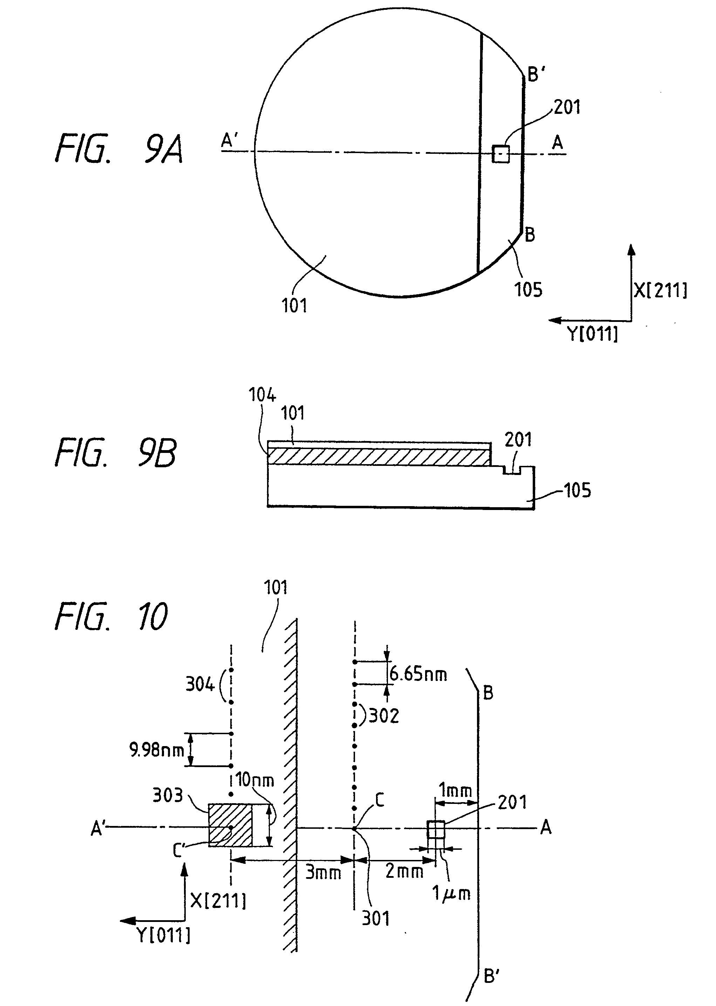

(57) A fine-pointed microprotrusion (8) for use as the tip of a scanning tunnel microscope probe or recording stylus is produced by deposition of metal (5) through a mask (4,7) the aperture of which mask (4,7) is reduced during deposition so that a conical or otherwise tapered microprotrusion (8) of height between 2 μm and 10 μm and a fine pointed apex of atomic scale shall result. In the preferred performance of this method the metal is deposited upon an electrode coated substrate (2,1) of semiconductor material in which is defined an integral amplifier or other IC element (fig. 7C). The microprotrusion is preferably of noble metal or is coated with noble metal. Styli (102,103) produced as above may be utilised as a pair in a recording/reproducing device (fig.3), one stylus (103) to detect position and the other stylus (102) to record/reproduce/erase. Position detection using an embodied co-ordinate axis system (fig. 10) is described.

*FIG. 1A*

EP 0 449 409 A2

FIG. 1C

# PROBE UNIT, INFORMATION PROCESSING DEVICE USING SAME AND METHODS OF USE AND MANUFACTURE

## BACKGROUND OF THE INVENTION

### Field of the Invention

This invention relates to a probe unit which enables surface observation of high resolving power when a scanning tunnel microscope (STM) is used and enables recording of large capacity and high density when used for a recording and reproduction device, an information processing device and an information processing method by use thereof.

### Related Background Art

In recent years, recording capacity of the data in recording and reproduction device tends to become larger, and the size of recording unit is becoming smaller and the recording density higher. For example, in digital audio disc by optical recording, the size of recording unit has become even about 1 $\mu m^2$. As the background, there is activation of memory material development, and inexpensive and high density recording medium by use of an organic thin film such as of organic dye, photopolymer, etc. has appeared.

On the other hand, recently, a scanning tunnel microscope (hereinafter abbreviated as STM) which can observe directly the electron structure of the surface atom of a conductor has been developed [G. Binnig et al., Helvetica Physica Acta, 55, 726 (1982)], and it has become possible to measure a real spatial image of high resolution irrespectively of whether it is single crystal or amorphous. Besides, it has the advantage that observation can be made without giving damages with current to the medium, and further actuation in the air is possible to be used for various materials, whereby it has been expected to be widely applied.

STM utilizes flow of a tunnel current when a metal probe (probe electrode) and an electroconductive substance are approached to a distance of about 1 nm with application of a voltage therebetween. The current is very sensitive to the change in distance between the both, and by scanning the probe so as to maintain constantly the current or the average distance between the both, the surface information of the real space can be obtained. In this case, the resolving power in the interplanar direction is about 1 Å.

By utilizing the principle of STM, it is possible to perform high density recording and reproduction sufficiently on the atomic order (several Å). As the recording and reproduction method in this case, there have been proposed the method in which recording is performed by changing the surface state of an appropriate recording layer by use of particle ray (electron beam, ion beam) or high energy electromagnetic wave such as visible or UV-ray, etc. and reproducing effected by STM (Japanese Laid-open Patent Application No. 63-204531), the method in which recording and reproduction are performed by use of a material having the memory effect for the switching characteristic of the voltage and current as the recording layer, such as thin film layer of $\pi$ electron type organic compound or a chalcogenide (Japanese Laid-open Patent Application Nos. 63-161552, 63-161553), etc.

For performing such recording and reproduction at molecular level, the recording density becomes higher as the radius of curvature at the probe tip opposed to the recording layer is smaller, and therefore it has been desired ideally to have a probe which is as sharp as about one atom. At the same time, from the standpoint of functional improvement of the recording and reproduction system, particularly speed up, simultaneous driving of a large number of probes (multiple formation of probe) has been proposed, and for this reason probes with regular characteristics prepared on the same substrate have been demanded.

In the prior art, probe electrodes with small electrode area or small radius of curvature at the tip portion as described above have been prepared by use of cutting and electrolytic polishing, etc. In the cutting method, a wire material of fibrous crystal was cut by use of a clock lathe, whereby a probe having a fine tip with a radius of curvature of about 5 to 10 $\mu m$ can be prepared, while according to the wire drawing with a dice, one with a radius of curvature of 10 $\mu m$ or less can be prepared. On the other hand, the electrolytic polishing method points the tip by having a wire material which becomes the probe (generally with a diameter of 1 mm or less) corroded in an electrolyte by application of a voltage, whereby a fine probe with a radius of curvature at the tip of 0.1 to 1 $\mu m$ can be prepared.

However, of the fine probe preparation methods of the prior art, the cutting method is not only unsuitable for making the tip radius of curvature small, but also a stress is applied on the probe, whereby there was involved the drawback that it is susceptible to bending. On the other hand, the probe tip prepared by the electrolytic method will never satisfy the curvature of radius on the atomic, molecular order. Further, in the preparation

3

methods of the prior art as described above, it has been difficult to prepare a fine shape with good reproducibility, with the yield in the preparation steps being low, and at the same time difficult to prepare a large number of probes on the same substrate.

The probe electrode prepared according to the methods as described above is fixed on the device by a screw or holding with a spring force, and therefore when attention is paid on the tip of the probe electrode, it also has the drawbacks of weak regidity, namely low inherent vibration number.

Therefore a probe unit is unstable against disturbance such as vibration. As the result, problems such as the reduction of the resolution ability in recording-reproducing and the collision of probe with the recording medium used to be caused. This is also the same case with the tip of the probe electrode prepared by the electrolytic polishing method.

Therefore, all of the recording methods as described above are methods which enable high density recording by making avail of the characteristics of STM, but such high densification depends on how small the tip radius of curvature of the probe electrode can be made.

## SUMMARY OF THE INVENTION

Accordingly, an object of the present invention is to provide a probe unit having a sharp apex portion with a great atomic level and a probe electrode with high rigidity, an information processing device and an information processing method enabling surface observation of high resolving power or recording of high capacity and high density by use thereof.

Therefore, according to the present invention, there is provided a probe unit comprising a substrate and a fine protrusion having a height of 10 μm or less formed on said substrate.

Further, according to the present invention, there is provided an information processing device having a probe electrode comprising a substrate and a fine protrusion having a height of 10 μm or less formed on the substrate, a recording medium provided as opposed to said probe electrode, and a means for applying a voltage between said probe electrode and said recording medium.

## BRIEF DESCRIPTION OF THE DRAWINGS

Figs. 1A to 2C are illustrations showing preparation procedure of the fine probe electrode according to the present invention;

Fig. 3 is a block diagram showing schematically the recording and reproduction device;

Fig. 4 is a principle chart showing the positional relationship between the coordinate axis and the recording position;

Fig. 5 is a view of the probe electrode as seen from the medium side;

Figs. 6A to 7C are respectively sectional views showing the preparation steps along a-a and b-b in Fig. 5;

Figs. 8A to 8D are views showing the preparation procedure of the fine protrusion (probe electrode) in an example;

Fig. 9A is a plan view showing one mode of the recording medium of the present invention;

Fig. 9B is a its sectional view along A-A';

Fig. 10 is a schematic view showing one mode of the positional relationship between the coordinate axis on the surface of the recording medium of the present invention;

Fig. 11 is a block diagram showing schematically the recording and reproduction device for illustration of Example 2 of the present invention;

Fig. 12A is a plan view of the recording medium used in Example 2;

Fig. 12B is a its sectional view along A-A';

Fig. 13 is a schematic view showing the recording position on the recording material surface of Example 2;

Fig. 14A is a plan view of another recording medium used in the present invention;

Fig. 14B is a its sectional view along A-A';

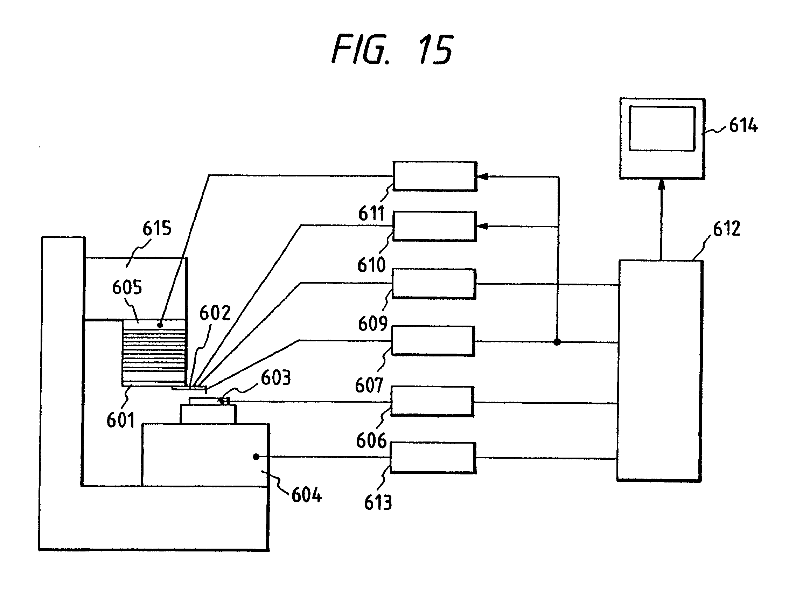

Fig. 15 is a block diagram showing schematically the scanning tunnel microscope of the present invention.

## DETAILED DESCRIPTION OF THE PREFERRED EMBODIMENTS

In the following, the respective constitutional parts are described in detail.

<Probe Electrode>

One of the techniques well known in the art for preparing a large number of electrodes with a small radius of curvature at the tip and regular shapes on the same substrate is the preparation method concerning cold cathode for electron beam radiation, particularly the technique based on the report by Spint of SRI Research Institute (J. Appl. Phys., 39 (1968) 3504). More specifically, a metal or a metal oxide of cold cathode material is obliquely vapor deposited on a mask plate placed in front of a substrate, and by utilizing positively the fact that the mask opening area becomes smaller with vapor deposition at this time, a protrusion shaped in cone or pyramid is prepared below the mask opening, which is in turn used as the cold electrode for electron beam emission.

The present invention, in order to accomplish the objects of the present invention by solving the problems as mentioned above, is intended to use a protrusion formed on a support prepared by applying the cold cathode preparation method of Spint as the probe electrode.

The main remarkable effect of the probe electrode of the present invention is attributable greatly to the shape of said probe electrode. Therefore, prior to detailed description of the present invention, first the preparation of said probe electrode is clarified.

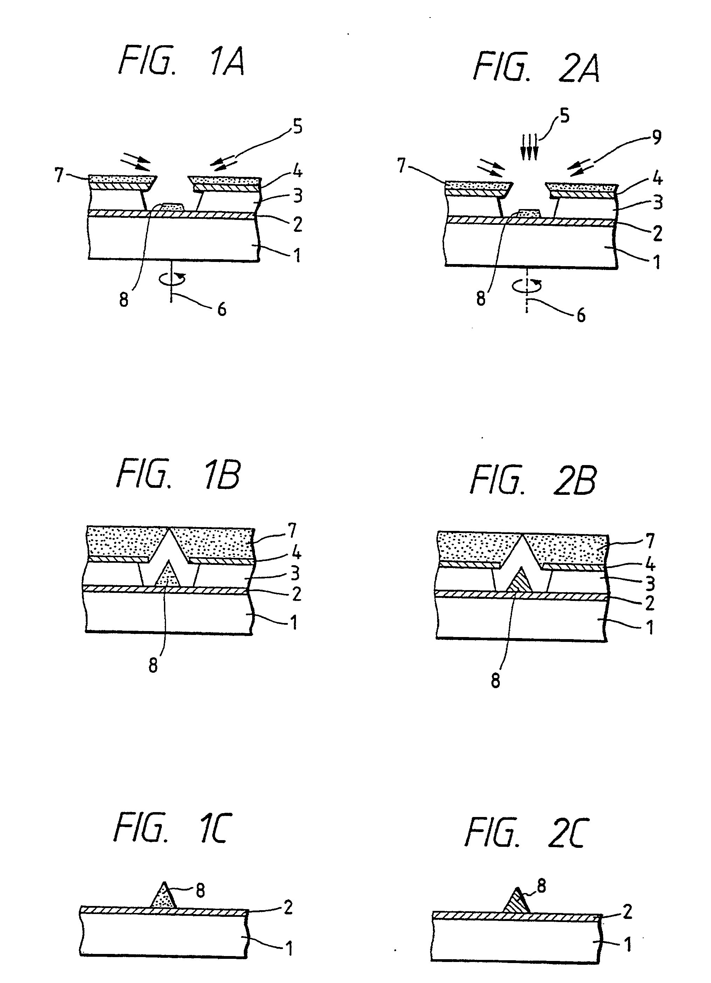

Fig. 1 illustrates schematically the preparation procedure and the preparation method. In the first place, on the substrate 1 is previously prepared a complex thin film with a layered structure comprising the metal 2 for wiring, the mask support 3 and the vapor deposition mask 4 comprising a circular or polygonal opening. Such complex thin film can be prepared according to known techniques known in the art, for example, the thin film preparation technique such as the chemical vapor deposition method, the vacuum vapor deposition method or the sputtering method, and the photolithographic method and the etching technique. The preparation method is not limited in the present invention.

Next, as shown in Fig. 1A, under the state where such substrate is rotated by the substrate rotating means 6, a desired probe electrode material 5 is vapor deposited from the direction oblique with respect to the complex thin film on the substrate toward the opening. At this time, also on the vapor deposition mask 4 is deposited the probe electrode material 5 (the vapor deposited film formed on the vapor deposited mask is called the mask formed film 7), and also vapor deposition is effected at the opening end of such vapor deposited mask 4, whereby the opening is covered with progress of vapor deposition to reduce the opening area (Fig. 1B). As the result, a fine protrusion shaped in cone or pyramid with a pointed tip is formed with the vapor deposited substance below the vapor deposited mask 4.

Said fine protrusion to be used as the probe electrode is required to have high rigidity as mentioned above, and therefore desired to have a low height. It is proper for a bottom of the probe electrode to have 1 - 10 $\mu$m in size from the standpoints of width of a wiring material and precision of processing. It is suitable to have the same degree of the probe height as the size, i.e., 10 $\mu$m or less so as to realize high rigidity. Further, since it is formed by a thin film preparation technique such as vapor deposition, the fine protrusion height is desired to be 10 $\mu$m or less from the standpoints of productivity and economy. More specifically, it should be 8 $\mu$m or less from a viewpoint of yield. On the other hand, in view of the restrictions of the unevenness on the surface of the recording medium to the supporting substrate, precision of founding the supporting substrate, deflection of the substrate and so forth, it is desired to have a height of at least 2 $\mu$m so that the probe may function as the probe electrode. Then, by removing the mask and the support by chemical treatment, etc., the probe electrode 8 on the above-mentioned substrate can be obtained (Fig. 1C). Of course, such mask 4 and support 3 are not required to be removed, provided that the mask 4 or the support 3 does not impede the function and the actuation of said probe electrode. However, the material constituting such mask 4, for the purpose of forming the above-mentioned complex thin film, should also be desirably a material which can be removed easily by chemical treatment or photoetching. For example, as the material for the support 3, an organic material such as photoresist, etc. or $Al_2O_3$, $SiO$, $SiO_2$, $CaF_2$, $MgF_2$ may be employed, and a metallic material as the material for the mask 4, particularly Cr, Al, W for easiness in film formation and etching. It is possible to use many semiconductor materials, typically Si. Particularly in Si single crystals, they have different etching speeds for chemical etching depending on the kinds and the concentrations of the impurities (P, Sb, B, In, etc.), and therefore promising as the material which constitute both of the support 3 and the mask 4.

In the above-mentioned preparation method example, the material covering over the mask opening and the probe electrode material were the same, but even in such method wherein the material covering over the mask opening (mask forming material 9) is obliquely vapor deposited separately from the probe electrode vapor deposition, the objects of the present invention can be accomplished (Fig. 2). At this time, the probe electrode can be vapor deposited from the front of the mask opening, which is useful with respect to vapor deposition rate, etc. By performing oblique vapor deposition from the two directions or more at the same time, the substrate is not required to be rotated.

Having described above about an example of the method according to vapor deposition as the means for preparing the probe electrode 8, the vapor deposition method as herein mentioned also includes widely the molecular beam epitaxial method and the ion beam growth method, etc. in addition to vacuum vapor depositions methods such as by the resistance heating method and the electron beam method. It is also possible to prepare the probe electrode according to other thin film growth methods in general such as the sputtering method or the chemical vapor deposition method, etc., but the radius of curvature at the tip of the protrusion shaped in cone or pyramid formed below the mask opening will be larger according to such methods as compared with the above-mentioned vapor deposition method. However, a diversity of materials are applicable to the vapor deposition method, and selectability of the material constituting the probe electrode can be said to be noticeably high.

Although any conductive material can be applied as such material, noble metals such as Au, Ag, Pt and Pd are suitable from the standoint of the stability with the passage of time or in environment. Further, the projection on the substrate can be also prepared with another material, which can be covered to form the probe electrode constituent material. Further, according to the present invention, besides the selectability of the material, it has become possible to apply various simple preparation methods, typically vapor deposition. Also the degree of freedom of the substrate has been markedly improved. Further, since a large number of said probe electrodes can be formed easily at the same time to obtain probes with regular characteristics and therefore a great contribution can be made to multiple formation of probe electrodes.

On the other hand, said probe electrode can be also easily prepared on a semiconductor substrate such as of silicon, etc. Accordingly, on a semiconductor device formed on such substrate according to the preparation method known in the art, for example, an amplifying or switching device such as transistor, etc. on the silicon substrate, the probe electrode of the present invention can be prepared directly or sufficiently approximate thereto. The tunnel current detected by the probe electrode is weak as the electrical signal, and the output impedance as the signal source is high. Therefore, at the stage before the signal processing or calculation is performed, such electrical signal is required to be amplified (pre-amplifier). In the prior art, for example in STM, for the restriction in its constitution of the pre-amplifier, the probe electrode and the pre-amplifier were located apart at a certain distance from each other. However, as described above, according to the present invention, it has become possible to provide said probe electrode and the pre-amplifier factually adjacent to each other. Of course, even the signal processing or calculation circuit can be also formed on the same substrate, whereby the system can be made compact along with remarkable improvement of the characteristics.

Further, said probe electrode can be prepared directly on the substrate having a driving mechanism such as PLZT piezoelectric member or on the thin film formed on such substrate. As the result, a great contribution can be made to simplification and compaction of the driving mechanism of the probe electrode.

<Recording Medium>

As the recording medium to be used in the present invention, materials having the memory-switching phenomenon (electrical memory effect) in current-voltage characteristics can be utilized.

For example, there can be included those as described below:

(1) Amorphous semiconductors such as oxide glasses or borate glasses or chalcogenide glasses containing Se, Te, As compounded with the elements of the groups III, IV, V, VI of the periodic table. They are intrinsic semiconductors with an optical band gap Eg of 0.6 to 1.4 eV or an electrical activation energy $\Delta E$ of about 0.7 to 1.6 eV. Specific examples of the chalcogenide glass may include the As-Se-Te system, the Ge-As-Se system, the Si-Ge-As-Te system, such as $Si_{16}Ge_{14}As_5Te_{65}$ (suffix indicates atomic %), or the Ge-Te-X system, the Si-Te-X system (X = small amount of element of the group V, VI), such as $Ge_{15}Te_{81}Sb_2S_2$.

Further, the Ge-Sb-Se system chalcogenize glass can be also used.

In the amorphous semiconductor layer having the above-mentioned compounds deposited on the electrode, by applying a voltage in the direction vertical to the film surface by use of the probe electrode, the electrical memory effect of the medium can be exhibited.

As the deposition method of such material, the objects of the present invention can be accomplished sufficiently by the thin film formation technique known in the art. For example, as a preferable film formation method, the vacuum vapor deposition method or the cluster ion beam method, etc. can be included. Generally speaking, the electrical memory effect of such material has been observed at a film thickness of several μm or less, and concerning recording resolving power as the recording medium, one with a thickness of 100 Å to 1 μm is preferred from the standpoint of recording characteristics, more preferably one with a film thickness of 1000 Å or less.

(2) Further, there may be included organic semiconductor layers having salts of electron accepting compounds such as tetraquinodimethane (TCNQ), TCNQ derivatives such as tetrafluorotetracyanoquinodimethane

(TCNQF$_4$), tetracyanoethylene (TCNE) and tetracyanonaphothoquinodimethane (TNAP), etc. with metals of relatively lower reduction potential such as copper, silver, etc.

As the method for forming such organic semiconductor layer, the method of vacuum vapor depositing the above-mentioned electron accepting compound on an electrode of copper or silver may be employed.

The electrical memory effect of such organic semiconductor has been observed for one with a film thickness of some 10 μm or less, but one with a film thickness of 100 Å to 1 μm is preferable from the standpoints of film forming propert, uniformity.

(3) Further, recording medium with use of amorphous silicon as the material can be included. For example, it is a recording medium having a layer constitution of metal/a-Si (p$^+$ layer/n layer/i i layer) or metal/a-Si (n$^+$ layer/ p layer/ i layer), and the deposition methods of the respective layers of a-Si can be sufficiently practiced according to the methods known in the art. In the present invention, the glow discharge method (GD) can be preferably used. As the film thicknesses of a-Si, n layer may be preferably about 2000 Å to 8000 Å, i layer and p$^+$ layer preferably about 1000 Å, with the total film thickness being preferably about 0.5 μm to 1 μm.

(4) Still further, recording medium with molecules having the group having conjugated π electron system and the group having only σ electron group in combination laminated on an electrode can be included.

As the structure of the dye having the conjugate π electron system, there may be included, for example, dyes having the porphyrin skelton such as phthalocyanine, tetraphenylporphyrin, azylene type dyes having squarylium group and chroconicmethine group as the linking chain and dyes alalogous to cyanine type having nitrogen containing two heterocyclic groups such as quinoline, benzothiazole, benzooxazole linked through squarylium group and chroconicmethine group, or cyanine dyes, fused polycyclic aromatic compounds such as anthracene and pyrene, etc., and chain compounds of polymerized aromatic ring or heterocyclic compounds, and polymers of diacetylene group, further derivatives of tetraquinodimethane or tetrathiofluvalene, and analogues and charge transfer complexes thereof, and further metal complex compounds such as ferrocene, trisbipyridine ruthenium complex, etc.

Concerning formation of organic recording medium, specifically the vapor deposition method or the cluster ion beam method, etc. can be applied, but among the known prior art techniques, the LB method is extremely preferred from the standpoints of controllability, easiness and reproducibility.

According to the LB method, it is possible to form easily a monomolecular film of an organic compound having hydrophobic sites and hydrophilic sites in one molecular or its built-up film, and organic ultra-thin films having a thickness on the molecular order, and being uniform and homogeneous over a large area can be supplied stably.

The LB method is the method in which a monomolecular film or its built-up film is formed by utilizing the phenomenon that in a molecule with a structure having hydrophilic sites and hydrophobic sites within molecule, when the balance between both (amphiphilic balance) is adequately maintained, the molecule becomes a monomolecular layer on water surface with the hydrophilic groups directed downward.

As the group constituting the hydrophobic sites, there may be included various hydrophobic groups generally known widely in the art such as saturated and unsaturated hydrocarbon groups, fused polycyclic aromatic groups and chain polycyclic phenyl groups, etc. These constitute hydrophobic portions each individually or as a combination of a plurality thereof. On the other hand, most representative of the constituent of the hydrophilic portion, for example, hydrophilic groups such as carboxyl groups, ester groups, acid amide groups, imide groups, hydroxyl groups, further amino groups (primary, secondary, tertiary and quaternary), etc. may be included. These also each individually or a plurality thereof combined constitute the hydrophilic portion of the above-mentioned molecule.

A dye molecule having these hydrophobic groups and hydrophilic groups with good balance and having a π electron system with an adequate size, a monomolecular film can be formed on water surface, which becomes an extremely suitable material for the present invention.

Specific examples may include, for example, the same compounds as those described on p. 4 to p. 13 in EPA 0272935.

Other than those described above, dye materials suitable for the LB method are suitable for the present invention as a matter of course. For example, biological material which have been actively studied in recent years (e.g. bacteriorhodopsin or cytochrome c), synthetis polypeptides (e.g. PBLG), etc. are also applicable.

The electrical memory effect of the compounds having conjugated π electron system has been observed for those having a film thickness of some 10 μm or less, but those with film thicknesses of 15 to 2000 Å are prepared.

As the substrate supporting the material having the electrical effect as described above in the items (1) to (4), all of conductors having an electroconductivity of 10$^{-6}$ Ω$^{-1}$·cm$^{-11}$ can be used, provided that they are required to have the characteristics as the electrode. Specifically, there may be included a large number of materials, namely metal plates of Au, Pt, Pd, Ag, Al, In, Sn, Pb, W, etc. or alloys thereof, glasses having these metals or alloys vapor deposited thereon, ceramics, plastic materials, or Si (crystalline, amorphous), graphite, and further electroconductive oxides such as ITO, etc.

<Construction of Recording and Reproduction Device>

Fig. 3 is a block diagram of the recording device when having two probe electrodes for positional detection and for recording and reproduction in the present invention. In Fig. 3, 102 and 103 are respectively probe electrodes to be used for recording-reproduction and for positional detection (probe electrode 102 for recording-reproduction and probe electrode 103 for positional detection), and the distance between these probe electrodes can be finely adjusted by the interval adjustment mechanism 112 between the probe electrodes by use of a piezoelectric device, but ordinarily is maintained at a constant interval. 106 is a probe current amplifier, 109 a servo circuit for controlling the fine adjustment mechanisms 107, 108 in the Z-axis direction by use of a piezoelectric device so as to make the probe current approximately constant. 113 is a pulse power source for applying a pulse voltage for recording/erasing between the probe electrode 102 for recording-reproduction and the substrate electrode 104.

Since the probe current abruptly changes when a pulse voltage is applied, the servo circuit 109 controls the HOLD circuit to be ON so that the output voltage may be approximately constant.

110 is an XY scanning driving circuit which controls the XY direction fine adjustment mechanism 111 for moving a pair of probe electrodes 102, 103 in the XY direction. The coarse adjustment mechanism 114 and the coarse adjustment driving circuit 115 are used for controlling coarsely the distance between the probe electrodes 102, 103 and the recording medium 1 on the XY stage 118 so as to obtain previously a probe current of about $10^{-9}$ A or taking greatly (outside the range of fine adjustment mechanism) the relative displacement in the XY direction between the probe electrode and the substrate.

The respective instruments are all under central control by the microcomputer 116. 117 shows a display instrument. 101 shows a recording layer and 105 a medium substrate.

In the following, the mechanical performances in movement control by use of a piezoelectric device are shown.

Z direction fine adjustment range:
    0.1 nm - 1 $\mu$m
Z direction coarse adjustment range:
    10 nm - 10 mm
XY direction scanning range: 0.1 nm - 1 $\mu$m
XY direction coarse adjustment range:
    10 nm - 10 mm
Measurement, control tolerable error: <
    0.1 nm (during fine control)
Measurement, control tolerable error: <
    1 nm (during coarse control)

< Positional Detection System>

When the radius of curvature at the tip of the probe electrode becomes small to enable high density recording such higher densification depends greatly on the scanning precision and the positional control precision of the probe electrode in the interplanar direction (X-Y direction) of recording. Here, recording and reproduction are performed as the position of the recording medium corresponding to the positional coordinate which is the standard.

The positional detection method of the present invention utilizes the fact that a tunnel current flows when the distance between the electroconductive probe (probe electrode) and an electroconductive substance are approximated to about 1 nm while applying a voltage therebetween similarly as in recording-reproduction of information. Since the tunnel current depends on the work function at the conductor surface, informations of various surface electron states can be read. By utilizing this, for a recording medium having regular atomic arrangement or original points which become the standard formed as desired, by introducing a positional coordinate system based on such atomic arrangement or the standard original points and detecting the characteristic change in tunnel current corresponding to such positional coordinate system, the recording or reproduction position on the recording medium indicating the positional relationship relative to such positional coordinate, and also positional control of the probe onto such recording-reproduction position is performed.

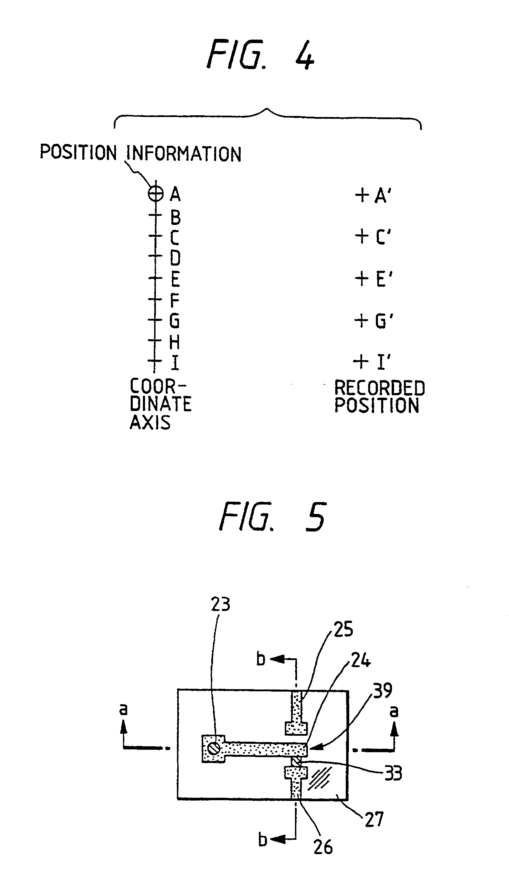

Fig. 4 shows schematically the positional relationship between the coordinate axis and the recording position. That is, the positional informations as the scale on the coordinate axis (A - I) are in positional relationships (A - A', etc.) relative to the recording positions (A' - I'). Therefore, by detecting the positional informations A - I, the recording positions A' - I' can be necessarily specified. In this case, the respective points (scales) on the coordinate axis are not necessarily required to take unequivocally relative positions (for example, recording positions such as A", A"', ... exist in addition to A' corresponding to the positional information A), but they should be preferably unequivocal (I : 1 correspondence) in precision. The coordinate axis is not required to be one, but a plurality of axes can be used, and otherwise it is not required to be one dimensional, but may be two-dimensional (like net). In this case, corresponding to the respective points of the dimensional coordinate system, recording systems are arranged also two dimensionally.

<Coordinate Axis>

The coordinate axis as the positional detection system to be used in the present invention is formed by use of a regular atomic arrangement and/or standard points formed as desired. As such regular atomic arrangement, electroconductive materials, namely various metals or graphite single crystal, etc. can be utilized, or otherwise, since the tunnel current utilized in the present invention has a magnitude of about nA, the above-mentioned electroconductive material may have an electroconductivity of $10^{-10}\Omega^{-1}$ cm$^{-1}$ or higher and therefore a single crystal of so called semiconductor such as silicon, etc. can be also used. Among them, as representative examples, metal samples are considered. Now, if a voltage V lower than the work function $\phi$ is applied between the probe electrode and the above-mentioned metal sample with a distance Z therebetween, it has been known that electrons tunnel the potential barrier wall. The tunnel current density $J_T$ can be determined by free electron approximation to be represented as $J_T = (\beta V/2\pi\lambda Z)\exp(-2Z/\lambda)$ ... (1), wherein

$$\lambda = h/\sqrt{2m\phi} \; : \; \text{attenuation distance of wave}$$

$$\text{function in vacuum or air outside of metal}$$

$h = r/2\pi$ : r: Planck's constant, m: mass of electron
$\beta = e^2/h$ : e: electron charge.

In the formula (1), if a constant value of Z = Zc is supposed, the tunnel current density $J_T$ will change corresponding to the function ø of the standard atomic arrangement. Therefore, when the probe electrode is scanned in any desired linear direction on the metal sample surface while maintaining Z = Zc, the tunnel current will change periodically according to the metal atomic arrangement. Here, when a metal sample of which the lattice constants are previously known is used, the atomic arrangement state in any desired direction with such lattice points on any desired crystal face as the standard is self-explanatory, and the periodical change in tunnel current obtained when the probe electrode is scanned in such direction can be sufficiently predicted. Therefore, by correcting the scanning direction of the probe electrode so that the predicted value of such tunnel current change and the measured value of the tunnel current change obtained by scanning practically the probe electrode may take equal values, the movement of the probe electrode will be along the atomic arrangement of the sample. More specifically, if the atomic arrangement is regarded as the coordinate axis, the probe electrode will move on the coordinate axis. Now, if we suppose that the probe electrode on the coordinate axis can move to a position apart with a certain distance toward a certain direction and the destination of movement is a region which can be recorded and reproduced, it becomes possible to perform recording and reproduction at the positions corresponding 1: 1 to the respective points on the coordinate axis. In this case, the probe electrode is not necessarily required to move between the coordinate axis and the recording region, but, for example, a probe electrode for recording and reproduction may be prepared at a predetermined position relative to the probe electrode moving on the coordinate axis (probe electrode for positional detection) may be prepared, and the both permitted to move in associated fashion.

Anyway, the position of the probe electrode in the recording region, namely the recording position can be determined unequivocally relative to the coordinate axis utilizing the crystal lattices of the metal sample.

As described above, when a part or all of the recording medium surface has a regular atomic arrangement, and its arrangement state is known, a recording medium having X-Y coordinate system exhibiting an unequivocal relative relationship to the coordinate axis utilizing the crystal lattice of such atomic arrangement can be set.

As the coordinate axis for positional detection, otherwise unevenness can be made, or a plurality of points which become the points for standards can be artificially made by ion injection of other atoms, etc., and these can be made the positional coordinates. However, the precision as the coordinate axis is inferior as compared with one utilizing the above-described atomic arrangement.

As described above, it has been shown that the positional coordinate is set on the recording medium and also recording-reproduction at the respective points corresponding to the positional coordinate are possible, but in practical recording-reproduction, the initiation points are required to be made clear. That is, original point which becomes the standard is required to be provided. As the standard original point, unevenness can be provided by such method as etching, etc. on the coordinate axis, or the surface state of the recording medium may be modified by ion injection, etc. However, as already described, these methods lack precision for use as the original point of the coordinate axis by use of atomic arrangement. Now, in Fig. 4, when the point A is chosen as the standard original point, discrimination of the point A and discrimination of the point A′ on the recording region which is unequivocal relative positional relationship with the point A are the same. Thus, if the point A′ can be discriminated, the coordinate axis and the respective points on the coordinate axis can be unequivocally determined. As the method for setting the standard original point at the point A′, it is excellent with respect to precision and also easiness in preparation to input the information as the original point to the point A′ according to the same method as writing of recording. Such standard original point is not required to be limited to one point, but plural points may be formed as desired corresponding to expansion of the recording region, etc.

The recording medium of the present invention is constituted by combining the electrical memory material as described above with its supporting substrate (electrode), but when an atomic arrangement is used as the coordinate axis, the atomic arrangement of such electrical memory material itself is inferior in regularity in most cases, and therefore utilization as the coordinate axis is not so preferable. Therefore, by use of a material having regular atomic arrangement such as metal, crystalline Si, graphite, etc., it is desirable to have a part of the electrical memory material undeposited and utilize the substrate atomic arrangement as the coordinate axis.

The present invention is described in detail below by referring to Examples.

## Example 1

In the following, description is made about the recording and reproducing device which is a first embodiment of the information processing device of the present invention.

An example using the recording and reproducing device shown in Fig. 3 is described below.

The probe electrodes 102, 103 were prepared according to the method as described below. Description is made by referring to Fig. 5 to Fig. 7. Fig. 5 is a plan view of the probe electrode completed, Figs. 6A to 6C are sectional views of the main preparation steps along the line a-a in Fig. 5. Figs. 7A - 7C are sectional view of the main preparation steps along the line b-b in Fig. 5.

As shown in Fig. 5, Fig. 6 the probe electrode of this example is formed of a micro-projection 23 comprising platinum (Pt) formed by vapor deposition on a silicon substrate 27 and MOS transistors 39 for amplification of the probe electrode provided in the vicinity of said micro-protrusion. The MOS transistor 39 has a gate electrode 24 comprising aluminum (Al), a source electrode 26 and a drain electrode 25 formed by vapor deposition, and a thin film resistance 33 comprising a material such as ruthenium, etc.

Details of the preparation steps of the probe electrode are as,described below.

First, as shown in Fig. 6A and Fig. 7A, a p-type silicon semiconductor substrate 27 is prepared, and on its main surface is formed a silicon oxide ($SiO_2$) film 28, and then antimony (Sb) was diffused in the formation region of the MOS transistor 39 to form $n^+$-diffusion layers 29, 30 which become the source and drain regions, respectively. Next, as shown in Fig. 6B and Fig. 7B, on the silicon oxide film 28 was deposited aluminum (Al) by the vacuum vapor deposition method, and by working by use of the photolithograhic technique, the gate electrode 24, and the drain electrode 25, the source electrode 26 were obtained.

Further, a thin film resistance material such as ruthenium was vapor deposited, and subjected to patterning by use of the photolithographic technique to form a thin film resistance 33 of the MOS transistor 39. Next, on one end of the gate electrode 24 was formed a micro-projection 23 to obtain a probe electrode having the MOS transistor 39 for amplification in the initial stage as shown in Fig. 6C, Fig. 7C and Fig. 5.

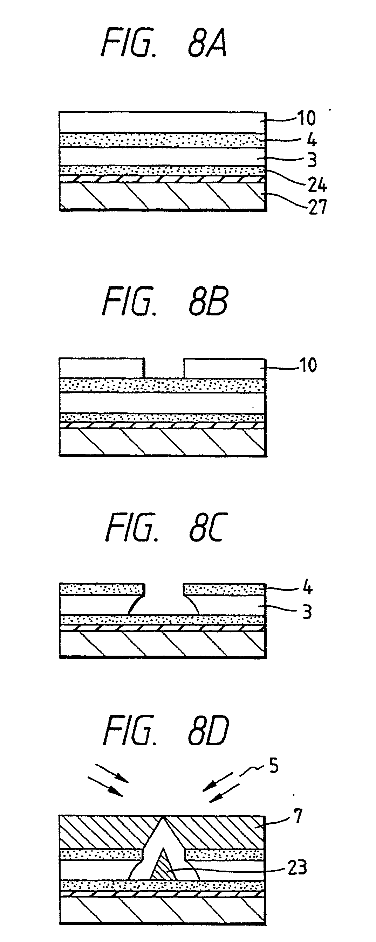

The micro-projection 23 was formed by applying the preparation method based on the report by Spint. The specific procedure is described by referring to Fig. 8. First, on the substrate 27 having a metal for wiring 24 formed thereon, a layer structure comprising a resist (lower layer) as the mask support 3, a metal mask as the vapor deposition mask 4 and a resist 10 (upper layer) was prepared (Fig. 8A). For the resists of both the lower and upper layers, a posi type resist AZ 1370 (Hoechst) was employed, coated by a spinner and further prebaked at 90°C for 20 minutes. A film thickness of the upper layer resist was set up to 1.3 μm. As to the lower layer resist, two kinds of the film thicknesses of 1.3 μm and 6 μm were considered. For the metal mask, Cr with a film thickness of 300 nm prepared by the vacuum vapor deposition method was employed.

Next, UV-ray was irradiated on the region on which the micro-probe electrodes are to be formed to effect exposure of the resist 10 (upper layer), followed by developing to remove the resist (upper layer) at the exposed portion (Fig. 8B). However, for the developer, MIF 312 diluted to half with water was employed, and the developing time made 30 seconds. Further, the Cr with the resist at the upper part being removed and subjected to exposure was etched with an ammonium cerium nitrate type Cr etchant to form a mask opening at the region previously irradiated with UV-ray. The etching speed was about 100 nm/min.

Next, with Cr as the mask, the lower resist was subjected to isotropic etching with acetone (2 to 10 seconds). The etching at this time progressed in the depth direction of the lower resist simultaneously in the lateral direction, whereby a shape with the lower surface of the Cr mask around the opening being also etched as shown in Fig. 8C was obtained.

Further, on the structural body having such shape, Pt as the probe material 5 was vapor deposited with said Cr layer as the mask. Vapor deposition was carried out under the state where the substrate is rotated from the oblique direction (75° direction with respect to the direction of the substrate surface) (Fig. 8D). As already described, simultaneously with growth of the probe material 5 on the substrate below the mask opening by said vapor deposition, growth occurs also on the mask 4, particularly at the mask opening end, and the mask opening area was reduced with progress of vapor deposition. As the result, the cone-shaped micro-protrusion 23 pointed at the tip was prepared below the mask 4. Further, by removing the mask forming film 7 and the lower resist 3 together with the mask 4 with a resist peeling liquid, the probe electrode shown in Fig. 6C was obtained.

When the probe electrode prepared as described above was observed by SEM, it was confirmed that a micro-probe electrode with a diameter at the probe electrode bottom of 6 μm and an electrode height of 2.7 μm in case that the file thickness of the lower layer resist was 1.3 μm, and a micro-probe electrode with an electrode height of 8 μm in case that the file thickness of the lower layer resist was 6 μm were respectively prepared. The radiuses of curvature of the tip of both of the probes were 0.01 μm. In the prior art example, the probe current detected by the probe was on the order of $10^{-9}$ A, while a probe electrode on the order of $10^{-7}$ A was obtained by amplification of the MOS transistor. Also, since the probe current detected by the micro-protrusion probe electrode 23 is immediately amplified without leading out externally of the substrate, as compared with the prior art example in which the probe current was led out externally of the substrate before amplification, the S/N ratio could be improved to great extent. Also, in both cases of the probe electrodes with a probe height of 2.7 μm and 8 μm, as, the result of observation of the cleaved surface of carbon by STM by use of the probe electrode of the present invention, observation could be done clearly at the atomic level to confirm that the micro-protrusion probe of this example could sufficiently stand practical application.

The probe was used as the probe electrodes 102, 103 of the recording/reproduction devices shown in Fig. 3. The probe electrodes 102, 103 are used to control the distance (2) from the surface of the recording medium 1 and the distance (2) is each independently under fine adjustment control by piezoelectric devices so as to maintain constantly the current. Further, the fine adjustment control mechanism is designed so as to control finely the distance (2) in the interplanar direction (X,Y) while maintaining it constantly.

Of the two probe electrodes, the probe electrode 103 for positional detection is used for the atomic arrangement as the positional coordinate of the substrate 105. On the other hand, the probe electrode 102 for recording and reproduction is maintained at a constant position with respect to the probe electrode 103 and the X, Y directions (its interval can be controlled by use of the probe electrode interval fine controlling mechanism 112), and used for recording, reproduction and erasing for the recording layer 101.

These two probe electrodes are designed so that they can be finely controlled in the interplanar (X,Y) direction by movement in a mutual concerted fashion, but they are each independently finely controlled in the Z direction. The recording medium 1 is placed on an X-Y stage 118 of high precision, and can be moved to any desired position (X-Y coarse adjustment mechanism). The X-Y direction of the coarse adjustment mechanism and the X-Y direction of the fine adjustment mechanism can be made coincident within the range of the error caused by the difference in precision of the respective adjustment mechanisms.

Next, the recording medium used in this example is described in detail. Fig. 9 shows a constitutional view of the recording medium. Here, the coordinate system is the XY coordinate system in the case of Si (111). A P-type Si wafer with the (111) face exposed having a diameter of 1/2 inch (B doped, 0.3 mm thickness) was employed as the substrate 105. Said substrate is cut at the point B - B' in order to make the directionality during setting on the X-Y stage 118 of the recording-reproduction device substantially constant. The point B - B' is substantially in parallel to the [$\overline{2}$11] direction of the Si crystal. Next, the position 1 mm toward the substrate center from B - B' was etched to 1 μm square and a depth 0.2 μm to prepare the reference original point (coarse) 201. The preparation method of such reference original point (coarse) is shown below.

First, a polymethyl methacrylate which is the electron beam resist (PMMA: trade name OEBR-1000, Tokyo Oka Kogyo K.K.) was coated on an Si substrate to a thickness of 1 μm, and an electron beam was drawn at an acceleration voltage of 20 keV, with a beam diameter of 0.1 μmφ to a size of 1 μm square. Then, by use of a developer for exclusive use, the electron beam irradiated portion was dissolved. As for etching, by use of a gas mixture of $CF_4$ and $H_2$, sputter etching was effected at a pressure of 3 Pa, a discharging power of 100 W for 20 minutes. The etching depth at that time was 0.2 μm. Finally, PMMA was dissolved by use of methyl ethyl ketone.

Next, after the vicinity of the reference original point (coarse) 201 was masked on such substrate, Cr was deposited according to the vacuum vapor deposition method as the subbing layer to a thickness of 50 Å, followed further by vapor deposition of Au according to the same method to 400 Å to provide a substrate electrode 104.

Next, on such Au electrode, an LB film (8 layers) of squarylium-bis-6-octylazulene (hereinafter abbreviated as SOAZ) was laminated to provide a recording layer 101. In the following, the recording layer formation method is described. First, a benzene solution containing SOAZ dissolved at a concentration of 0.2 mg/ml therein was spread on an aqueous phase of 20°C to form a monomolecular film on the water surface. Having awaited evaporation of the solvent, the surface pressure of such monomolecular film was enhanced to 20 mN/m, and further while maintaining constantly the pressure, the above substrate was dipped and withdrawn gently in the direction transversing the water surface at a speed of 3 mm/min. repeatedly, to form a built-up film of 8 layers of SOAZ monomolecular film on the substrate electrode 104.

By use of the recording medium 1 prepared as described above, the experiments of recording and reproduction were performed.

In the following, they are described in detail.

The recording medium 1 having the recording 101 with 8 SOAZ built-up layers was placed on the X-Y stage 118 with the cutting of the substrate and the B - B' being aligned in a predetermined direction. Next, to the position innerside about 1 mm of the substrate from B - B', the probe electrode 102 for positional detection was moved, and on application of a probe voltage of 0.6 V between the probe electrode for positional detection and the Si substrate 105, the X direction of the X-Y direction fine adjustment mechanisms 110, 111 was aligned tentatively in the direction substantially in parallel to B - B', and then the probe was scanned over a length of 1 μm. Next, also in the Y direction (perpendicular to the X direction), it was scanned over 1 μm. At this time, the manner of taking X-Y coordinate axis was variously varied to repeat the measurement of the surface state, thereby adjusting the arrangement pitches of Si atoms obtained so as to take the values most approximate to 6.65 Å and 3.84 Å, respectively. In Fig. 10, 302 show lattice points, which are represented per 10 points. By such adjustment, X-axis of the Y-direction fine adjustment mechanism is coincident with the $[\bar{2}11]$ direction of the Si substrate and Y-axis with the $[01\bar{1}]$ direction. At this time, adjustment was made so that X-Y directions of the coarse adjustment mechanism were coincident with the X-Y directions of the fine adjustment mechanisms adjusted within the control error of the coarse adjustment mechanisms. Next, by use of the coarse adjustment mechanism with the X-Y directions, the position of the reference original point (coarse) 201 was detected by scanning the probe electrode for positional detection. The lattice point of Si was detected by use of the fine adjustment mechanism at the position 2 mm toward the substrate center along the Y-axis direction from the center of the reference original point (coarse) 201. With such lattice point (point C in Fig. 10) as the positional coordinate axis original point 301, the probe electrode 103 was scanned in the X directon ($[\bar{2}11]$ direction). By confirming the respective lattice points with respect to the $[\bar{2}11]$ direction of Si in this case, directional control correction and confirmation of the positional coordinate (lattice pitch) were conducted. In such operations, the probe electrode 102 for recording and reproduction also moves on the recording layer 101 in a concerted fashion with the probe electrode 103 for positional detection. In the present example, the distance between the both probe electrodes was found to be 3 mm in the Y-axis direction. Recording of a desired information was performed by use of such probe electrode 102 for recording and reproduction, and prior to practical recording, a reference original point (fine) 303 was provided at the recording position corresponding to the positional coordinate axis original point 301 (point C' in Fig. 10). Such reference original point (fine) is formed by utilizing the electrical memory effect of the recording layer 101. More specifically, by applying a probe voltage of 1.0 V between the probe electrode 102 for recording and reproduction and the Au electrode 104, and by use of a fine adjustment control mechanism 107 in the Z-axis direction so that the probe electrode $I_p$ may be $10^{-9}$ A, the distance (Z) between the probe electrode 102 for recording and reproduction and the surface of the recording layer 101 was adjusted. Next, with the probe electrode 102 for recording and reproduction on the + side and the Au electrode 104 on the - side, a rectangular pulse voltage (4 V, 0.1 μs) of the threshold value voltage Vth ON or higher at which the electrical memory material (SOAZ, LB film 8 layers) changes to the low resistance state (ON state) was applied to give rise to the ON state. While maintaining the distance (Z) between the probe electrode 102 for recording and reproduction and the recording layer 101, a probe voltage of 1.0 V was applied between the probe electrode 102 for recording and reproduction and the Au electrode 104 for measurement of the probe electrode $I_p$. As the result, a current of about 5 μA flowed, whereby the ON state was confirmed. According to the operations as described above, the reference original point (fine) 303 was formed. By making the recording layer region of 10 nm square ON state, the positional information as the original point concerning the reference original point (fine) 303 and the recording information written later were prevented from being reproduced confusedly (Fig. 10), but the shape of the reference original point (fine) 303 will not be limited to the shape of this example.

Next, the lattice point of the probe electrode 103 for positional detection was scanned in the [$\bar{2}$11] direction while confirming the lattice point, and recording was performed by use of the probe electrode 103 for recording and reproduction moving at the same time in a concerted fashion per 15 pitches (9.98 nm). Accordingly, the pitch of the recording point 304 was also 9.98 nm (Fig. 10). Such recording was performed according to the same method as formation of the reference original point (fine) 303 by making the ON state and the OFF state (high resistance state before recording) on the recording layer (SOAZ, LB film 8 layers) 101.

The recording medium after recording formed via the steps as described above was once dismantled from the recording and reproduction device, and again mounted on X-Y stage 118 for reproduction experiment. First, in the same manner as during recording, the X-Y directions were made coincident with the respect [$\bar{2}$11] and [01$\bar{1}$] directions by utilizing the Si lattice, and the probe electrode 103 for positional detection was scanned by use of the probe electrode 103 for positional detection by use of the coarse adjustment mechanism with respect to the X-Y directions to detect the position of the reference original point (coarse) 201. On the basis of such reference original point (coarse) 201, the probe electrode 102 for recording and reproduction was scanned by use of the coarse and fine adjustment mechanisms to detect the reference original point (fine) 303. At the same time, the probe electrode 103 for positional detection was confirmed to be located on the Si lattice point (positional coordinate axis original point 301). In this case, if there is a deviation, the X-Y coordination system was corrected by use of the fine adjustment mechanism so that the probe electrode 103 for positional detection might be coincident with the Si lattice point. The coordinate system shown in Fig. 10 is the X-Y coordinate system after correction. Next, with a probe voltage of 0.6 V applied between the probe electrode 103 for positional detection and the Au electrode 104, the probe was scanned in the [$\bar{2}$11] direction (X-axis direction) while detecting the Si lattice point. At the same time, a probe voltage of 1.0 V was applied between the probe electrode 102 for recording and reproduction moving in a concerted fashion and the Au electrode 104, and reading directly the change in probe current amount based on the ON state or the OFF state at the respective recording points, or scanning the probe electrode 102 for recording and reproduction so that the probe current $I_p$ may become constant, the change in the distance Z between said probe electrode 102 for recording and reproduction and the surface of the recording layer 101 through the servo circuit 109 to effect reproduction of the recorded information.

The reproduction speed at this time can be made more rapid by approximately one cipher as compared with the case when using a tungsten probe of the prior art, in both cases of the probe electrodes with an probe height of 2.7 μm and 8 μm.

In order to increase the recording capacity, it is also possible to provide a plurality of probe electrodes 102 and perform recording and reproduction at the respective electrodes.

It was also confirmed that as the result of setting the probe voltage at 10 V which is higher than the threshold voltage Vth OFF at which the electrical memory material changes from the ON state to the OFF state, and tracing again the recording position, all the recorded positions were erased to be transitioned to the OFF state.

Example 2

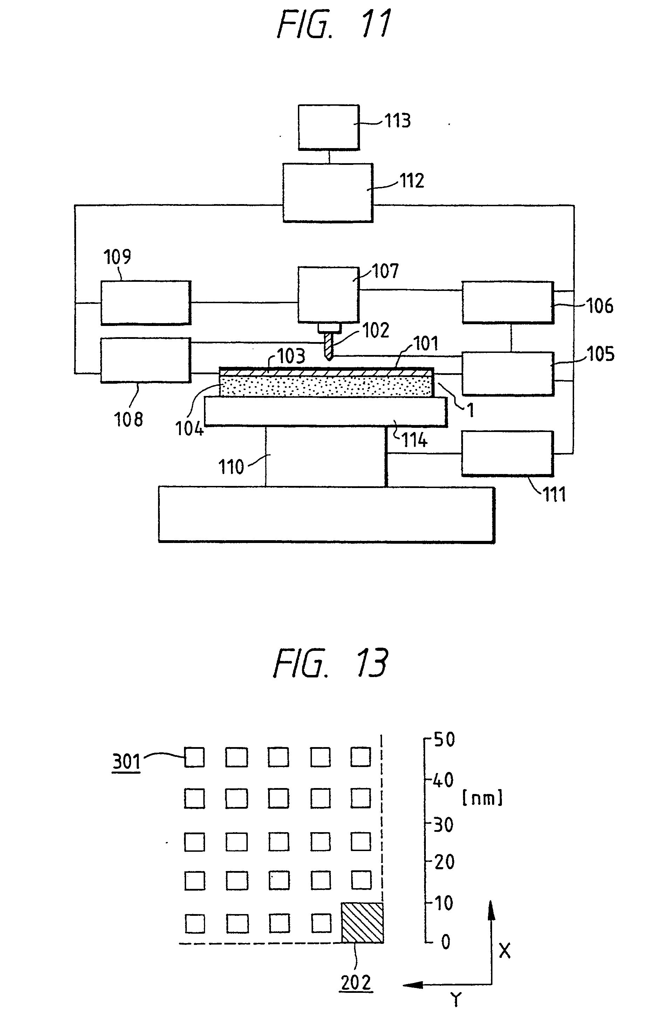

Next, another example is shown. Recording and reproduction were performed by use of a micro-protrusion formed directly on a piezoelectric device as the probe electrode 102 in Fig. 11.

The piezoelectric device was prepared on a silicon substrate with the MOS transistor obtained in the same manner as in the foregoing example formed adjacent thereto. More specifically, with the use of the substrate shown in Fig. 6B as the support, a ZnO thin film with a film thickness of 50 μm was formed according to the RF sputtering method. More specifically, by use of a quadrupolar magnetron sputtering device, a film was formed with a gas mixture of Ar + $O_2$ (1 : 1) under the conditions of a gas pressure of 6 x 10$^{-3}$ Torr, a substrate temperature of 300 °C and an RF power of 200 W. The ZnO obtained was a c-axis oriented film. A counter-electrode was made with the subbing electrode (not shown) previously formed on the silicon substrate and the upper electrode formed on such ZnO.

On such piezoelectric device was prepared an $SiO_2$ thin film with a thickness of about 1 μm for the purpose of insulation, followed by preparation of a Pt micro-protrusion with a height of 8 μm on such support similarly as in Example 1. Further said micro-protrusion was bonded by wire bonding to the gate electrode of the MOS transistor to obtain a probe electrode.

The probe electrode prepared as described above was set in the recording and reproduction device shown in Fig. 11, and recording and reproduction were conducted in the same manner as in the foregoing example. In Fig. 11, 1 is a recording medium, 101 a recording layer, 102 a probe electrode, 103 a substrate electrode, 104 a substrate, 105 a probe current amplifier, 106 a servo circuit, 107 a fine adjustment mechanism, 108 a pulse power source, 109 an XY scanning driving circuit, 110 a coarse adjustment mechanism, 111 a coarse adjustment driving circuit, 112 a microcomputer, 113 a display device and 114 an XY stage.

The probe electrode 102 is provided for controlling the distance (Z) of the recording medium 1 from the surface, and the distance (Z) is finely controlled by the above piezoelectric device so as to maintain constantly the current. Fine adjustment in the interplanar (X, Y) direction is designed so as to be done by the fine adjustment mechanism 107 separately provided. However, there are known techniques.

The probe electrode 102 is used for performing relative directional positional detection within the recording medium plane, as well as recording, reproduction and erasing. The recording medium 1 is placed on the XY stage 114 of high precision and can be moved to any desired position (X-Y coarse adjustment mechanism). The X, Y directions of the coarse adjustment mechanism and the X, Y directions of the fine adjustment mechanism are coincident within the error range caused by the difference in precision between the respective adjustment mechanisms.

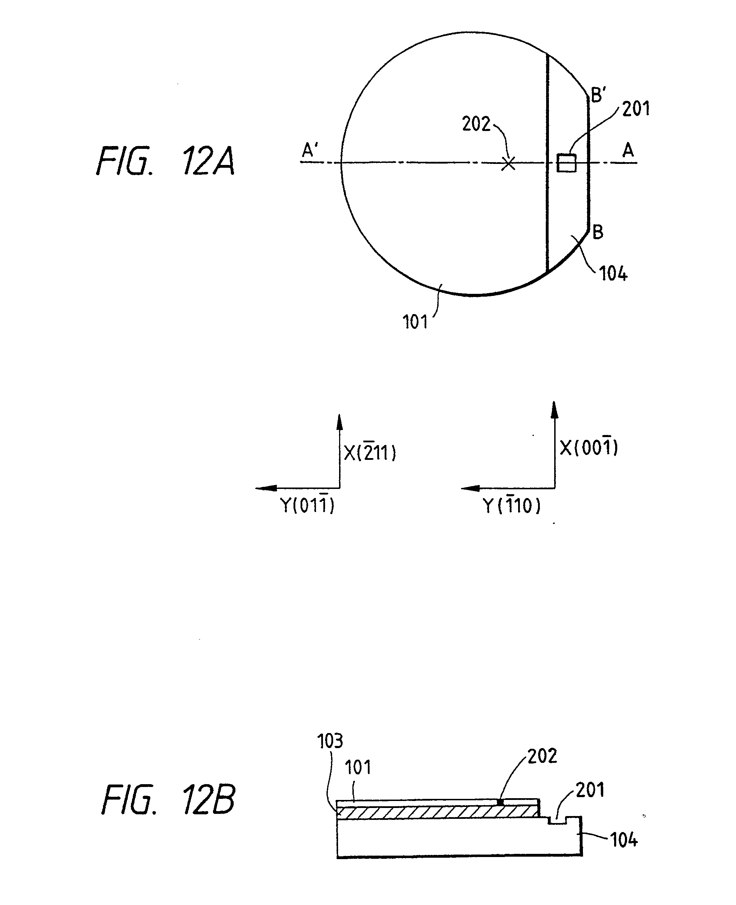

Next, the recording medium used in the present example is described in detail. Fig. 12A shows a constitutional view of the recording medium. Fig. 12A is a plan view of the recording medium used in the present invention, and Fig. 12B is a sectional view thereof along A - A'. In Fig. 12A, 101 is a recording layer, 104 a substrate, 201 a reference original point (coarse), 202 a reference original point (fine). The coordinate systems shown there are the XY coordinate system in the case of Si (111), which is written on the left side, and the XY coordinate system in the case of Gd-As (110), which is written on the right side. In Fig. 12B, 103 is a substrate electrode. A P-type Si wafer (B doped, 0.3 mm thickness) will be (111) surface of 1/2 inch in diameter exposed was used as the substrate 104. Said substrate is cut at the point B - B' in order to make the directionality substantially constant during setting of the recording and reproduction device on the X-Y state 114. The point B - B' is substantially in parallel to the $[\bar{2}11]$ direction of the Si crystal.

Next, etching was effected at the position of 1 mm from the middle point of B - B' toward the substrate center of 1 µm square and a depth of 0.2 µm to prepare a standard original point (coarse). The preparation method of such standard original point (coarse) is shown below.

First, a polymethyl methacrylate (PMMA, trade name OEBR-1000, Tokyo Oka Kogyo K.K.) which is the electron beam was coated on an Si substrate to a thickness of 1 µm, and an electron beam was drawn to a size of 1 µm square at an acceleration voltage of 20 keV and a beam diameter of 0.1 µmφ. Then, the electron beam irradiated portion was dissolved by use of a developer for exclusive use. For etching, by use of a gas mixture of $CF_4$ and $H_2$, under a pressure of 3 Pa and a discharge power of 100 W for 20 minutes, sputtering etching was effected. The etching depth at that time was 0.2 µm. Finally PMMA was dissolved with methyl ethyl ketone.

Next, after masking of the vicinity of the reference original point (coarse) 201 on the substrate, a subbing layer of Cr was deposited to a thickness of 50 Å, and further Au was vapor deposited by the same method to 400 Å to form a substrate electrode 103.

Next, on such Au electrode was laminated an LB film (4 layers) of squarylium bis-6-octylazulene (hereinafter abbreviated as SOAZ) to provide a recording layer 101. In the following, the method for forming the recording layer is described. First, a benzene solution containing SOAZ dissolved at a concentration of 0.2 mg/ml therein was spread on an aqueous phase of 20°C to form a monomolecular film on the water surface. Having awaited evaporation of the solvent, the surface pressure of such monomolecular film was enhanced to 20 mN/m, and further while maintaining constantly the pressure, the above substrate was dipped and withdrawn gently in the direction transversing the water surface at a speed of 3 mm/min. repeatedly, to form a built-up film of 4 layers of SOAZ monomolecular film on the substrate electrode 103.

By use of the recording medium prepared as described above, the experiments of recording and reproduction were performed.

In the following, they are described in detail.

The recording medium 1 having the recording 101 with 8 SOAZ built-up layers was placed on the X-Y stage 114 with the cutting of the substrate B - B' being aligned in a predetermined direction.

Next, to the position innerside about 1 mm of the substrate from B - B', the probe electrode 102 for positional detection was moved, and on application of a probe voltage of 0.6 V between the probe electrode for positional detection and the Si substrate 104, the X direction of the probe fine adjustment mechanisms 107, 109 was aligned tentatively in the direction substantially in parallel to B - B', and then the probe was scanned over a length of 1 µm.

Next, also in the Y direction (perpendicular to the X direction), it was scanned over 1 µm. At this time, the manner of taking X-Y coordinate axis was variously varied to repeat the measurement of the surface state, thereby adjusting the arrangement pitches of Si atoms obtained so as to take the values most approximate to 6.65 Å and 3.84 Å, respectively. By such agjustement, X-axis of the fine adjustment mechanism was coincident with the $[\bar{2}11]$ direction of the Si substrate and Y-axis with the $[01\bar{1}]$ direction.

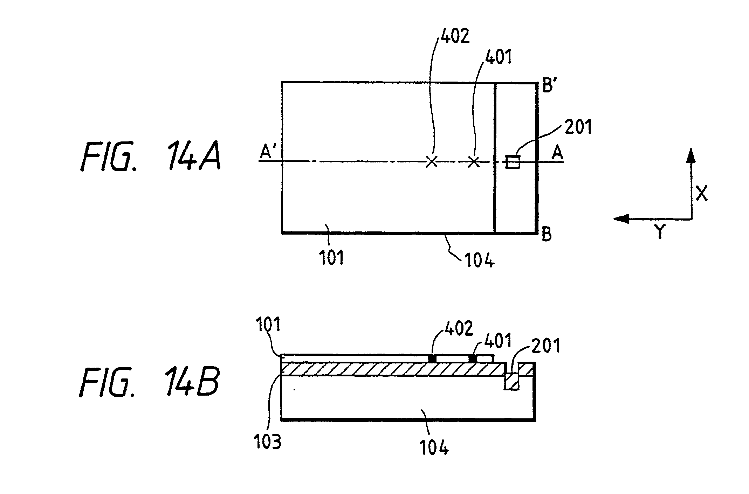

At this time, adjustment was made at the same time so that X, Y directions of the coarse adjustment mechanism were coincident with the X, Y directions of the fine adjustment mechanisms within the control error of the coarse adjustment mechanism. Next, by use of the coarse adjustment mechanism with the X, Y directions, the position of the reference original point (coarse) 201 was detected by scanning the probe electrode for positional detection. The standard original point (fine) 202 was provided at the position 2 mm toward the substrate center along the Y-axis direction from the center of such standard original point (coarse) 201. Such standard original point (fine) is formed by utilizing the electrical memory effect of the recording layer 101. More specifically, a probe voltage of 1.0 V was applied between the probe electrode 102 and the Au electrode 103, and the distance (Z) between the probe electrode 102 and the surface of the recording layer 101 was adjusted by use of the above-mentioned piezoelectric device (not shown) so that the probe current became $10^{-9}$ A. Next, with the probe electrode 102 on the + side and the Au electrode on the - side, a rectangular pulse voltage (4 V, 0.1 $\mu$s) of the threshold value voltage Vth ON or higher at which the electrical memory material (SOAZ, LB film 4 layers) changes to the low resistance state (ON state) was applied to give rise to the ON state. While maintaining the distance (Z) between the probe electrode 102 and the recording layer 1, a probe voltage of 1.0 V was applied between the probe electrode 102 and the Au electrode 104 for measurement of the probe electrode $I_p$. As the result, a current of about 5 $\mu$ flowed, whereby the ON state was confirmed. According to the operations as described above, the reference original point (fine) 202 was formed. By making the recording layer region of 10 nm square ON state, the positional information as the original point concerning the standard original point (fine) 202 and the recording information written later were prevented from being reproduced confusedly (Fig. 13), but the shape of the standard original point (fine) 202 will not be limited to the shape of this example. In Fig. 13, 301 shows the recording and reproduction position.

Next, by moving such original point (fine) as the original point on the X, Y directions of the probe electrode positional control the probe electrode 102 was finely scanned to perform recording of informations at 0.01 $\mu$m pitch. Fig. 12 shows schematically the recording positions per one bit on the recording surface 101. Such recording was performed according to the same method as information of the reference original point (fine) by making the ON state and the OFF state (high resistance state before recording) on the recording layer (SOAZ, LB film 4 layers).

The recording medium after recording formed via the steps as described above was once dismantled from the recording and reproduction device, and again mounted on X-Y stage for reproduction experiment. First, in the same manner as during recording, the X-Y directions were made coincident with the respective [$\bar{2}$11] and [01$\bar{1}$] directions by utilizing the Si atom scale, and the probe electrode was scanned by use of the coarse adjustment mechanism with respect to the X-Y directions to detect the position of the reference original point (coarse) 201. On the basis of such reference original point (coarse) 201, the probe electrode was scanned by use of the coarse and fine adjustment mechanisms to search the reference original point (fine). With such standard original point (fine) as the original point of the X, Y coordinate system, reproduction of recorded information was performed. In this case, with a probe voltage of 1.0 V applied between the probe electrode 102 for positional detection and the Au electrode 103, and reading directly the change in probe current amount flowing through the regions of the ON state or the OFF state at the respective recording points, or scanning the probe electrode 102 so that the probe current $I_p$ may become constant to read the change in the distance Z between the probe electrode 102 and the surface of the recording layer 101 through the servo circuit 109, positional detection of the reference original point (fine) 202 and reproduction of the recorded information were effected.

It was also confirmed that as the result of setting the probe voltage at 10 V which is higher than the threshold voltage Vth OFF or higher at which the electrical memory material changes from the ON state to the OFF state, and tracing again the recording position, all the recorded positions were erased to be transitioned to the OFF state.

In the present example, the distance (Z) between the probe/recording medium was controlled by the above-mentioned piezoelectric device, but the piezoelectrical device can be formed for the purpose of performing positional control in the direction in parallel to the recording medium surface (X, Y direction) as a matter of course. The piezoelectric material is not limited to ZnO, and further the driving system is not limited to piezoelectric material. For example, a fine protrusion can be also formed easily on one of the parallel flat plates with the gap being controlled by dielectric adsorption. The driving system principle will not limit the present invention at all.

## Example 3

An example of recording and reproduction is shown below by setting the X, Y coordinate system of the probe electrode scanning system by use of the reference scale with a plurality of standard original points.

Fig. 14 shows a constitutional view of the recording medium 1 used in the present example. As the substrate 104, a glass substrate (thickness 1 mm) optically polished of 0.7 x 1.5 cm was employed. Next, at the position 1 mm toward the substrate center from the central point of B - B', a reference original point (coarse) 201 with 1 μm square, a depth of 0.1 μm was prepared.

The preparation method of such reference original point (coarse) is shown below.

According to the photoresist method known in the art, a resist material (trade name AZ 1350) was coated to a thickness of 1 μm, prebaked and then subjected to UV-ray exposure by use of a mask corresponding to Fig. 13, developing and post-baking to form a mask pattern on a glass substrate. Next, based on the known $CF_4$ gas plasma etching method, the glass surface was subjected to dry etching of the glass surface to a depth of 0.1 μm under the conditions of an etching power of 50 W, a gas pressure of 1 Pa, a $CF_4$ gas flow rate of 15 SCCM. The mask of AZ 1350 was removed by acetone washing.

Such substrate was left to stand in saturated vapor of hexamethyldisilazane to apply hydrophobic treatment on the surface. On such substrate, Cr was deposited as the subbing layer to a thickness of 50 Å, and further Au was vapor deposited according to the same method to 400 Å to provide a substrate electrode 103. Next, on such Au electrode was laminated an LB film of 10 layers of t-butyl substituted derivative of luthethium diphthalocyanine $(LuH(Pc)_2)$ to form a recording layer 101. In this case, no recording layer 101 was deposited in the vicinity of the reference original point (coarse) 201.

In the following, film forming conditions of the LB film of the t-butyl substituted derivative of $LuH(Pc)_2$ are described.

Solvent:

chloroform/trimethylbenzene/acetone = 1/1/2 (V/V)

Concentration: 0.5 mg/ml

Aqueous phase: pure water, water temperature 20°C

Surface pressure: 20 mN/m

Substrate vertical movement speed: 3 mm/min.

By use of the recording medium 1 as described above and the recording and reproduction device described in Example 2, the experiments of recording and reproduction were carried out. In the following, they are described in detail.

With the B - B' direction of the recording medium 1 having the recording layer 101 with an LB film of 10 layers of the t-butyl substituted derivative of $LuH(Pc)_2$ built up in conformity with the X-axis direction of the X, Y stage 114, the recording medium was set on such X, Y stage. Next, similarly as in Example 1, by use of the coarse adjustment mechanism 110, the probe electrode 102 was scanned to detect the position of the standard original point (coarse) 201. The probe voltage was made 0.1 V. At the position 2 mm toward the central portion of the substrate in the Y-axis direction from such standard original point (coarse) 201 (one the recording layer 101), by use of the same method as the preparation method of the standard original point (fine) in Example 1, the first standard original point (fine) 401 was prepared. The X, Y directions of the coarse adjustment mechanism and the X, Y directions of the fine adjustment mechanism were coincident within the control error of the coarse adjustment mechanism. Next, by use of the fine adjustment mechanism, the second standard original point (fine) 402 of 1 μm was prepared in the Y-axis direction from such first standard original point (fine) 401. The preparation method of such second standard original point (fine) 402 is the same as that of the first standard original point (fine), and for distinguishing the both, the shapes of the respective points may be made different, but necessarily required to be so, and these points may be devised so as not to be confused with other informations in general. Next, either one of the first standard original point (fine) 401 or the second standard original point (fine) 402 is taken as the original point of the X, Y-axis coordinate, recording of informations was performed by use of the fine adjustment mechanism at a pitch of 0.01 μm. The recording method was the same as in Example 1.

After the recording medium with the recording formed by the above-described steps was dismantled once from the recording and reproduction device, it was again set on the X, Y stage 114 for reproduction experiment. First, similarly as during recording, the probe electrode was scanned by the coarse adjustment mechanism with respect to the X, Y directions, the standard original point (coarse) 201 was found out, and on the basis of such standard original point (coarse), the first standard original point (fine) 401 was searched by use of the coarse and fine adjustment mechanisms. Next, after detection of the second standard original point (fine) 402 by use of the fine adjustment mechanism, the X, Y coordinate system was reset so that the direction of the line connecting between the first and the second standard original points (fine) may be coincident with the Y-axis of the probe electrode scanning system. In this case, the first standard original point (fine) 401. was set to be the original point of such X, Y coordinate system.

In order to increase the recording capacity, a plurality of standard points can be provided outside the fine adjustment scanning, whereby recording and reproduction can be performed with the respective points as the standards. Having described above in the examples about the preparation methods of recording media, and any film formation method capable of preparing an extremely uniform film may be employed, and the methods in the examples are not limitative. Also, the present invention is not limitative of the substrate material, its shape and surface structure at all.

## Example 4

Next, description is made about the scanning type tunnel microscope which is the second embodiment of the information processing device of the present invention.

Fig. 16 is a schematic view of the scanning type tunnel microscope of the present invention.

601 is a silicon substrate having the probe unit 602 of the present invention formed thereon, 605 a piezoelectric device for driving the silicon substrate 601, 615 an approaching mechanism of the piezoelectric element for coarse adjustment 605 and the probe unit 602 to the sample surface, 603 an electroconductive sample for surface observation and 604 an XY fine adjustment mechanism adjusting finely the sample 603 in the XY direction.

The scanning type tunnel microscope of the present invention is described below in detail.

The approaching mechanism 615 comprises a movement stage in the Z direction, and is approached manually or by a motor so that the probe of the probe unit 602 be within the stroke of the piezoelectric device 605 onto the surface of the sample 603.

In that case, by use of a microscope, etc., by monitoring the extent of approach by observation with eyes or by performing automatic delivery of the probe unit 602 under application of servo, approach is stopped at the point when the flow of the tunnel current between the probe and the sample is detected.

During observation of the sample 603, the tunnel current flowing between the sample 603 applied with the bias voltage by the bias circuit 606 and the probe is detected by the tunnel current detection circuit 607 to control the probe unit 602 so that the average distance between the probe and the surface sample by constant through the servo circuit 610 in the Z direction.

By scanning the probe unit 602 with the XY positional control circuit 609 under such state in the XY direction, a tunnel current changed by the fine unevenness on the sample surface is detected, which is incorporated into the control circuit 612 and processed as synchronized with the XY scanning signal, whereby an STM image of constant height mode can be obtained.

The STM image is displayed on the display 614 after processing of image processing, for example, two-dimensional FET.

In that case, since the stroke of the probe unit 602 in the Z-direction is small, if the temperature drift of the device, the unevenness, slanting of the surface of the sample 603 are great, no following becomes possible, and therefore, a feed-back of the region to the extent of 0.01 to 0.1 Hz is effected of the signal of the tunnel current detection circuit 607 by use of the piezo-electric device 605 for coarse adjustment through the coarse adjustment driving circuit 611 in the Z direction, thereby effecting control so as to control the great movement in the Z direction.

When the observation place is changed, the XY fine adjustment mechanism 604 is moved in the XY direction by the XY fine adjustment driving circuit 613, and observation is conducted so that the probe may come to a desired region.

By use of the scanning type tunnel microscope of the present invention, it has become possible to observe a sample with high resolution.

As described above, the probe electrode of the present invention has an apex portion with a greatly sharp atomic level, and therefore observation with high resolution is possible in STM, and high density recording and reproduction are possible at molecular and atomic levels in recording and reproducing devices.

Also, the probe electrode of the present invention is prepared by use of the photolithographic technique, and an amplifier can be formed in the forms adjacent thereto, and a plurality of micro-protrusions can be provided on the same substrate and the shape precision enhanced by controlling the production process, whereby reliability of recording and reproduction can be enhanced by improvement of S/N ratio, thus leading to excellent productivity in probe preparation as well as low cost.

Further, since the shape is fine and rigidity is high, the portions around the probe electrode and the recording medium can be made smaller, and therefore miniaturization of the device and the improvement of the driving speed due to the height of the intrinsic vibration number can be effected.

## Claims

1. A probe unit comprising a substrate and a probe electrode including a micro-protrusion having a height of 2 μm or more to 10 μm or less formed on said substrate.

2. A probe unit according to claim 1, wherein said micro-protrusion is formed through a metal layer on the substrate.

3. A probe unit according to claim 1, wherein the height of said micro-protrusion is within the range of 2 μm to 8 μm.

4. A probe unit according to claim 1, wherein said micro-protrusion has the structure of cone or pyramid.

5. A probe unit according to claim 1, wherein said micro-protrusion comprises a noble metal or a metal covered with a noble metal.

6. An information processing device comprising: a probe unit according to any one of the preceding claims; means for mounting a recording medium opposite to said probe unit; and a means for applying a voltage between said probe electrode and said recording medium.

7. An information processing device according to claim 6, wherein the probe electrode is equipped with an amplifier integral with said substrate.

8. An information processing device according to claim 6, having at least one more probe electrode.

9. An information processing device according to claim 6, including therein:
   a recording medium having a positional coordinate axis as a reference;
   a means for detecting position on said positional coordinate axis; and
   means for causing recording or reproduction and erasing of recorded information to be performed at a position of said recording medium corresponding to a coordinate position detected.

10. An information processing device according to claim 9, wherein the positional coordinate axis as said reference is a coordinate axis based on atomic arrangement.

11. An information processing device according to claim 9, wherein an original point as the reference is provided on at least one of the positional coordinate axis to become respectively a standard reference and a position of the recording medium corresponding thereto.

12. An information processing device according to claim 9, wherein there is provided a plurality of positional coordinate axes each to become a standard reference.

13. An information processing device according to claim 8 and 9, wherein one probe electrode is provided for positional coordinate detection, and another probe electrode is provided for recording or regeneration.

14. An information processing device according to claim 6, wherein said recording medium has an electrical memory effect.

15. An information processing device according to claim 6, wherein said recording medium has a standard scale which becomes a standard within a plane, and said device has a means for detecting the relative displacement in the interplanar direction of the recording medium between said standard scale and the probe electrode.

16. An information processing device according to claim 18, wherein said standard scale is a scale based on the atomic arrangement.

17. An information processing device according to claim 18, wherein said standard scale has an original point as the standard.

18. An information processing device according to claim 18, having a plurality of said standard scales set.

19. An information processing method, which comprises bringing a probe unit according to claims 1 to 5 to within a proximity of a sample or recording medium and applying a bias voltage between the probe electrode of the probe unit and the sample or recording medium to read out information recorded in the sample or recording medium.

**20.** An information processing method, which comprises bringing a probe unit according to claims 1 to 5 to within proximity of a recording medium and applying a pulse voltage between the probe electrode of the probe unit and the recording medium either to record information in, or to erase information recorded in, the recording medium.

**21.** Use of the probe unit according to claims 1 to 5 for information processing.

**22.** A method of producing a fine-pointed microprotrusion for use as the tip of a scanning tunnel microscope probe or recording stylus, which method comprises depositing a metal on a substrate through a mask aperture, and reducing the size of the mask aperture during deposition until there is formed a microprotrusion having a height of between 2 μm and 10 μm and a fine-pointed apex of atomic scale dimensions.

**23.** A method as claimed in claim 22 wherein said substrate is of semiconductor material and said microprotrusion is formed by deposition of said metal upon an electrode or electrode material layer at the surface of said substrate, which electrode or electrode material layer is in electrical contact with an integrated circuit element defined in said substrate.

FIG. 1A

FIG. 2A

FIG. 1B

FIG. 2B

FIG. 1C

FIG. 2C

# FIG. 3

# FIG. 4

POSITION INFORMATION

A         + A′

B

C         + C′

D

E         + E′

F

G         + G′

H

I         + I′

COOR-
DINATE
AXIS

RECORDED
POSITION

# FIG. 5

## FIG. 6A

28
P
27

## FIG. 7A

29
n+ P n+
28
27
30

## FIG. 6B

24
28
27
P

## FIG. 7B

26 24 25
n+ P n+
28
27

## FIG. 6C

23 24
28
27
P

## FIG. 7C

33
26 24 25
n+ P n+
28
27

## FIG. 8A

## FIG. 8B

## FIG. 8C

## FIG. 8D

FIG. 9A

B'

201

A'                                                          A

B

105

101

X[211]

Y[011]

FIG. 9B

104
101
201

105

FIG. 10

101

304

6.65nm

302

B

9.98nm

303      10nm

1mm      201

A'                                          C                              A

C'

3mm      2mm

1μm

X[211]

Y[011]

301

B'

# FIG. 11

# FIG. 13

FIG. 12A

X($\bar{2}$11)

Y(01$\bar{1}$)

X(00$\bar{1}$)

Y($\bar{1}$10)

FIG. 12B

FIG. 14A

FIG. 14B

FIG. 15

EP 0 449 409 A2